# EUROPÄISCHE PATENTSCHRIFT

(11) **EP 3 499 198 B1**
(45) Veröffentlichungstag und Bekanntmachung des Hinweises auf die Patenterteilung: **17.03.2021**
(21) Anmeldenummer: 18210973.6
(22) Anmeldetag: 07.12.2018
(51) Int. Cl.: G01G 19/02, G01G 23/10

(54) **WIM SENSOR MIT BESCHLEUNIGUNGSSENSOREN UND VERFAHREN ZUR DEFLEXIONS- UND PRÄSENZMESSUNG MITTELS EINES SOLCHEN**
WIM SENSOR WITH ACCELERATION SENSORS AND METHOD FOR DEFLEXION AND PRESENCE MEASURING BY MEANS OF THE SAME
CAPTEUR WIM POURVU DE CAPTEURS D'ACCÉLÉRATION ET PROCÉDÉ DE MESURE DE DÉFLEXION ET DE PRÉSENCE AU MOYEN D'UN TEL CAPTEUR

(30) Priorität: 15.12.2017 EP 17207625
(43) Veröffentlichungstag der Anmeldung: 19.06.2019
(73) Patentinhaber: Kistler Holding AG, 8408 Winterthur (CH)
(72) Erfinder: Minkoley, Dennis, 8408 Winterthur (CH); Hailesilassie, Biruk, 8902 Urdorf (CH)

(56) Entgegenhaltungen:
- CN-A- 1 821 725
- JP-A- S60 108 717
- JP-A- 2001 083 000

## Beschreibung

### Technisches Gebiet

Die Erfindung betrifft ein WIM System mit mindestens einem WIM Sensor und mindestens einem Beschleunigungssensor zur Analyse des Fahrbahnzustandes und Erhöhung der Messgenauigkeit.

### Stand der Technik

Weigh-in-Motion, kurz WIM, Systeme werden im Transportbereich eingesetzt um die Gesamtlast oder Achslast eines Fahrzeuges zu ermitteln oder um die Anzahl von Überfahrten von Achsen oder Fahrzeugen über einen Fahrbahnabschnitt zu ermitteln. Ein WIM System besteht dabei nicht abschliessend aus mindestens einem WIM Sensor und mindestens einem Auswerteelement. Unter einem Fahrbahnabschnitt wird eine Fahrbahn mit Fahrbahnbelag, Fahrbahnuntergrund und Bereich neben der Fahrbahn verstanden. Auf Grund der ermittelten Anzahl und/oder Achslast der Fahrzeuge werden Schritte eingeleitet, die unter anderem geeignet sind eine Beschädigung der Fahrbahn durch Überlast zu vermeiden, nutzungsabhängige Wartungsintervalle der Fahrbahn zu bestimmen, von der Gesamtlast oder der Achslast oder von der Anzahl der Achsen eines Fahrzeuges abhängige Zahlungen zu ermitteln und die Verkehrssicherheit zu erhöhen.

WIM Sensoren sind in den Fahrbahnbelag eines Fahrbahnabschnittes eingefügt, wobei eine Fahrspur eines Fahrzeuges in Längsrichtung zur Fahrtrichtung durch mehrere, längs zur Fahrtrichtung nebeneinander in den Fahrbahnbelag eingebrachte WIM Sensoren durchquert ist, wobei je ein WIM Sensor eine Radspur eines Fahrzeuges durchquert, wobei der WIM Sensor so in den Fahrbahnbelag des Fahrbahnabschnittes angeordnet ist, dass er mit der Oberfläche des Fahrbahnbelags des Fahrbahnabschnittes eine Ebene bildet. Der WIM Sensor ist im Allgemeinen als längliches Profil ausgeführt. Unter einer Radspur wird dabei die Trajektorie eines Rades eines Fahrzeuges auf dem Fahrbahnbelag bei Überfahrt des Fahrzeuges verstanden. Unter einer Fahrspur wird die Gesamtheit aller Radspuren eines Fahrzeuges verstanden. Es ist auch eine Ausführungsform bekannt, in der die komplette Fahrspur des Fahrzeuges durch einen einzelnen langen WIM Sensor durchquert wird.

Im WIM Sensor ist für die Ermittlung der Last eines Rades oder einer Achse typischerweise mindestens ein Kraftsensor angeordnet. Der Kraftsensor gibt bei der Einwirkung einer Kraft, beispielsweise auf Grund einer Radlast bei der Überfahrt eines Rades, ein Kraftsensorsignal aus.

Die Ermittlung der Last eines Rades erfolgt mittels Messung dynamischer Bodenreaktionskräfte durch mindestens einen Kraftsensor bei Überfahrt eines Rades und der Geschwindigkeit eines Rads. Unter einer Bodenreaktionskraft wird dabei die Kraft verstanden, die einer von einem Rad auf den Boden ausgeübten Kraft entgegenwirkt. Die Geschwindigkeit wird üblicherweise auf Grund der Laufzeit zwischen zwei in Fahrrichtung des Rades beabstandeten WIM Sensoren berechnet.

Die Ermittlung der Last des Rades wird durch ein Nachgeben des Fahrbahnuntergrunds und/oder des Fahrbahnbelags in welchem der WIM Sensor angeordnet ist, verfälscht. So wird bei einem weichen Fahrbahnbelag oder Fahrbahnuntergrund und einem resultierenden starken Nachgeben des Fahrbahnbelags oder Fahrbahnuntergrunds eine geringere Kraft erfasst, als bei einem festeren, starren Untergrund oder Fahrbahnbelag. Das Nachgeben des Untergrunds wird im Folgenden als Deflexion bezeichnet, wobei die Deflexion angibt, wie stark der Fahrbahnuntergrund oder Fahrbahnbelag aus einer Ruhelage ausgelenkt wird, wobei die Ruhelage die Position des Fahrbahnuntergrunds oder Fahrbahnbelags im unbelasteten Zustand anzeigt.

Des Weiteren spielen auch die Kosten eines WIM Systems eine immer grössere Rolle. Es wird eine möglichst langes Wartungsintervall und, getrieben vom Trend der Vernetzung von mehreren WIM Systemen, eine möglichst autarke Funktion der WIM Sensoren erwartet.

Aus US5265481A ist ein WIM Sensor bekannt mit einer Anzahl in einem Hohlprofil in Längsrichtung angeordneter piezoelektrischer Messelemente, kurz Piezoelemente; wobei die Piezoelemente an eine Signalverarbeitung derart angeschlossen sind, dass eine Kontaktierung eines einzelnen Piezoelements, oder einer Gruppe von Piezoelementen in elektrischer Parallelschaltung möglich ist; wobei ein Piezoelement aus Piezoscheiben zwischen Krafteinleitsegmenten besteht. In dem Hohlprofil können seitlich neben einem Piezoelement elektronische Komponenten, wie ein Vorverstärker, angeordnet sein, welche das Piezoelement oder die Gruppe von Piezoelementen kontaktieren. Dies ermöglicht eine Abstimmung der lokalen Messempfindlichkeit des oder der zugehörigen Piezoelemente durch den Vorverstärker auf die Umgebung, in welcher der WIM Sensor angeordnet ist. Durch diese Abstimmung, auch Kalibrierung genannt, wird die Messgenauigkeit eines WIM Sensors erhöht gegenüber einer Kalibrierung nach der Fertigung ohne Berücksichtigung der Umgebung, in welcher der WIM Sensor angeordnet ist.

Nachteilig ist hierbei, dass die Kalibrierung durch ein Kalibrierfahrzeug erfolgt und in regelmässigen zeitlichen Abständen wiederholt werden muss, um die ursprüngliche Messgenauigkeit wiederherzustellen.

Im Realbetrieb nimmt die Messgenauigkeit des WIM Sensors kontinuierlich ab, auf Grund einer betriebsbedingten Änderung in der Deflexion des Fahrbahnbelags und des Fahrbahnuntergrundes, beispielsweise durch Alterung, Abnutzung oder einer Änderung der Temperatur des Fahrbahnbelags oder Fahrbahnuntergrundes.

Aus JP2001083000A ist eine WIM-Plattform mit einer Messplatte, Beschleunigungssensor und Lastsensoren bekannt, wobei eine linearen viskosen Dämpfung die von einem über die Messplatte fahrenden Fahrzeug eingeleiteten Vibrationen auf das Detektionssignal der Lastsensoren dämpft. Die lineare viskose Dämpfung ist durch eine Vibrationserregungsvorrichtung basierend auf dem Erfassungswert des Beschleunigungssensors ausgeführt.

Eine erste Aufgabe der vorliegenden Erfindung liegt in der Beurteilung des Zustandes des Fahrbahnbelags eines Fahrbahnabschnittes durch die Analyse der Deflexion des Fahrbahnbelags des Fahrbahnabschnittes. Eine weitere Aufgabe ist eine Erhöhung der Genauigkeit des WIM Systems durch die Analyse der Deflexion des Fahrbahnbelags.

### Darstellung der Erfindung

Zumindest eine dieser Aufgaben wird durch die Merkmale des unabhängigen Anspruchs gelöst.

Die Erfindung betrifft ein WIM System zur Ermittlung von Lasten von Fahrzeugen auf einem Fahrbahnabschnitt bei der Überfahrt eines Rades eines Fahrzeuges über einen WIM Sensor; welcher WIM Sensor im Fahrbahnabschnitt im Fahrbahnbelag angeordnet ist und mit der Fahrbahnoberfläche eine Ebene bildet; welcher WIM Sensor mehrheitlich als ein entlang einer Längsachse lang ausgestaltetes Profil mit mindestens einem Raum ausgeführt ist; in welchem Raum mindestens ein Kraftsensor angeordnet ist; welcher Kraftsensor ein Kraftsensorsignal erzeugt; welches Kraftsensorsignal einer dynamischen Bodenreaktionskraft bei Überfahrt des Rades entspricht; wobei mindestens ein Beschleunigungssensor eine Beschleunigung des Fahrbahnbelags des Fahrbahnabschnitts, in welcher der WIM Sensor angeordnet ist, in mindestens einer Raumrichtung erfasst und als Beschleunigungssensorsignal bereitstellt.

Eine Last ist eine Gewichtskraft, kurz Kraft, die von einem Objekt auf einen Untergrund ausgeübt wird. Dementsprechend ist eine Radlast eine Kraft, die von einem Rad eines Fahrzeuges auf eine Fahrbahn ausgeübt wird; und eine Achslast ist eine Kraft, die von allen Rädern einer Achse eines Fahrzeuges auf eine Fahrbahn ausgeübt wird.

Die Bodenreaktionskraft und damit die Ermittlung der Last eines Rades, kurz Radlast, ist abhängig von der Deflexion des Fahrbahnbelags neben einem im Fahrbahnabschnitt angeordneten WIM Sensor und des Fahrbahnuntergrunds unter demselben WIM Sensor. Unter Deflexion wird eine reversible Auslenkung eines Objekts aus einer Gleichgewichtsposition unter Einwirkung einer Kraft verstanden. Das Deflexionsverhalten beschreibt die Deflexion eines Objekts in Abhängigkeit einer wirkenden Kraft. Die Höhe der Deflexion des Fahrbahnbelags und des Fahrbahnuntergrundes bei gleicher Krafteinwirkung kann auch Änderungen erfahren, beispielsweise durch Alterung oder Abnutzung des Fahrbahnbelags und des Fahrbahnuntergrunds. Daher hat die Änderung der Deflexion des Fahrbahnbelags und des Fahrbahnuntergrundes einen direkten Einfluss auf die Messgenauigkeit. Unter der Messgenauigkeit wird im Folgenden die Genauigkeit der Messung einer von einem Rad eines überfahrenden Fahrzeuges auf ein piezoelektrisches Messelement eines WIM Sensors ausgeübten Kraft verstanden.

Ein Rad eines auf einem Fahrbahnabschnitt entlang einer Fahrtrichtung fahrenden Fahrzeugs erzeugt durch die Radlast eine dynamische Deflexion des Fahrbahnabschnittes, welche Deflexion sich als Druckwelle im Fahrbahnabschnitt ausbreitet. Die positive Fahrtrichtung ist hierbei die Fahrtrichtung des Rades. Auch bildet sich vor dem bewegten Rad eine Deflexion der Fahrbahnoberfläche in positiver Höhenrichtung, welche senkrecht zum Fahrbahnbelag liegt. Die positive Höhenrichtung ist hierbei die Richtung von der Fahrbahnoberfläche zum Fahrzeug. An der Stelle, an der das Rad die Fahrbahnoberfläche berührt, tritt eine Deflexion der Fahrbahnoberfläche in negativer Höhenrichtung auf.

Auf Grund der dynamischen Bewegung des Rades über die Fahrbahnoberfläche tritt eine dynamische Deflexion auf, die mit einer Beschleunigung des Fahrbahnbelags und des Fahrbahnuntergrundes einhergeht. Dabei treten sowohl Beschleunigungen in Fahrtrichtung als auch in Höhenrichtung auf.

Durch die dynamische Deflexion breitet sich eine Druckwelle im Fahrbahnbelag aus, welche eine Beschleunigungskomponente in Fahrtrichtung eines Rades enthält.

Alle Beschleunigungen des Fahrbahnbelags betreffen selbstverständlich auch Elemente, die im Fahrbahnbelag eingebracht sind, wie beispielsweise einen dort eingebrachten WIM Sensor oder Beschleunigungssensor. Ein vorteilhafterweise im WIM Sensor oder im Fahrbahnabschnitt angeordneter Beschleunigungssensor nimmt diese Beschleunigung auf und stellt sie als Beschleunigungssensorsignal in Höhenrichtung und als Beschleunigungssensorsignal in Fahrrichtung bereit.

Das Beschleunigungssensorsignal wird in einem Mikroprozessor ausgewertet und es werden Deflexionsparameter berechnet. Diese Deflexionsparameter werden genutzt, um mindestens ein Kraftsensorsignal so zu kalibrieren, dass die Deflexion des Untergrundes das Messergebnis nicht beeinflusst.

Des Weiteren werden die Deflexionsparameter gespeichert und eine Zeitabhängigkeit der Parameter über einen definierten Zeitraum ausgewertet. Dadurch können abnutzungsbedingte, alterungsbedingte Änderungen des Deflexionsverhaltens erkannt und eine Wartung des Fahrbahnabschnittes veranlasst werden.

### Kurze Beschreibung der Zeichnungen

Im Folgenden wird die Erfindung beispielhaft unter Beizug der Figuren näher erklärt. Es zeigen
- Fig. 1: eine schematische Teilansicht eines Fahrbahnabschnittes mit im Fahrbahnabschnitt angeordneten WIM Sensoren,
- Fig. 2: eine schematische Schnittansicht eines Teiles eines Fahrbahnabschnittes in einer bevorzugten Ausführungsform mit einem Rad eines Fahrzeuges und einem WIM Sensor,
- Fig. 3: eine schematische Schnittansicht einer bevorzugten Ausführungsform eines Teiles eines WIM Sensors,
- Fig. 4: eine weitere schematische Schnittansicht einer bevorzugten Ausführungsform eines Teiles eines WIM Sensors,
- Fig. 5: eine schematische Darstellung des Beschleunigungssignals in Höhenrichtung in Abhängigkeit der Zeit bei Überfahrt eines Rades,
- Fig. 6: eine schematische Darstellung des Deflexionssignals berechnet aus dem Beschleunigungssensorsignal aus Fig. 5,
- Fig. 7: ein Diagramm der Signale eines WIM Sensors in bevorzugter Ausführungsform, wobei einzelne Komponenten des WIM Sensors auf Grund der Verständlichkeit ebenfalls im Diagramm schematisch dargestellt sind.
- Fig. 8: eine schematische Schnittansicht einer weiteren Ausführungsform eines Teiles eines WIM Sensors mit Energieversorgung,
- Fig. 9: eines Teiles eines Fahrbahnabschnittes in einer weiteren bevorzugten Ausführungsform mit einem Rad eines Fahrzeuges, einem Beschleunigungssensor und einem WIM Sensor,
- Fig. 10: eines Teiles eines Fahrbahnabschnittes in einer weiteren bevorzugten Ausführungsform mit einem Rad eines Fahrzeuges, einem Beschleunigungssensor und einem WIM Sensor,
- Fig. 11: eine schematische Schnittansicht einer weiteren Ausführungsform eines Teiles eines WIM Sensors mit Energy-Harvesting-Schaltung.

### Wege zur Ausführung der Erfindung

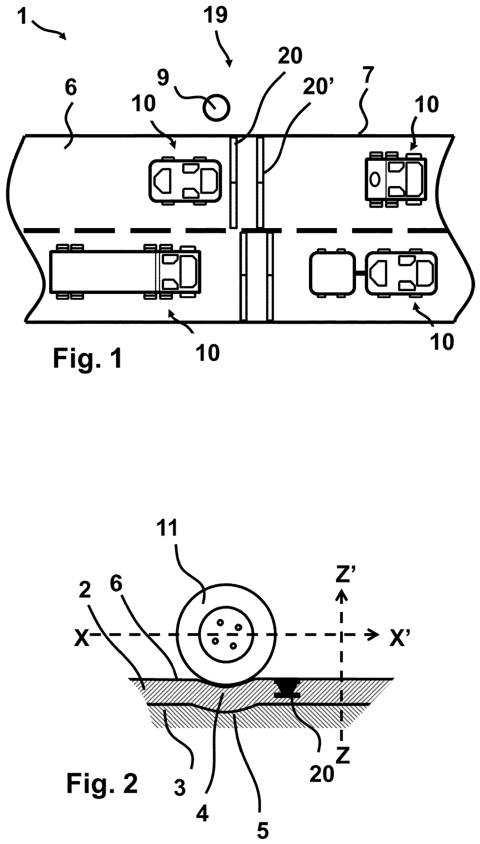

Fig. 1 zeigt einen Fahrbahnabschnitt 1 mit einer bevorzugten Ausführungsform eines WIM Systems 19 zur Ermittlung einer Radlast eines Fahrzeuges 10. Neben der Fahrbahn befindet sich in gezeigter Ausführungsform vorteilhafterweise ein Gehäuse 9.

Unter einem WIM System 19 wird in bevorzugter Ausführungsform die Anordnung in einem Fahrbahnabschnitt 1 mindestens zweier WIM Sensoren 20 in einer Radspur, mindestens eines Beschleunigungssensors 29 in einer Radspur, mindestens eines Mikroprozessors 31, mindestens eines nicht flüchtigen Speicherelements 32, und mindestens eines externen Auswerteelements 36 verstanden.

In bevorzugter Ausführungsform ist das externe Auswerteelement 36 an einer der folgenden Positionen angeordnet: im Gehäuse 9 oder an einer beliebigen Position ausserhalb des Fahrbahnabschnitts 1.

Fig. 2 zeigt eine Schnittansicht eines Fahrbahnabschnitts 1 in bevorzugter Ausführungsform mit einem darin angeordneten WIM Sensor 20. Die Fahrbahn des Fahrbahnabschnitts 1 ist vereinfacht dargestellt und besteht aus einem Fahrbahnbelag 2 und einem Fahrbahnuntergrund 3. Der WIM Sensor 20 ist im Fahrbahnabschnitt 1 derart angeordnet, dass er mit der Fahrbahnoberfläche 6 eine Ebene bildet.

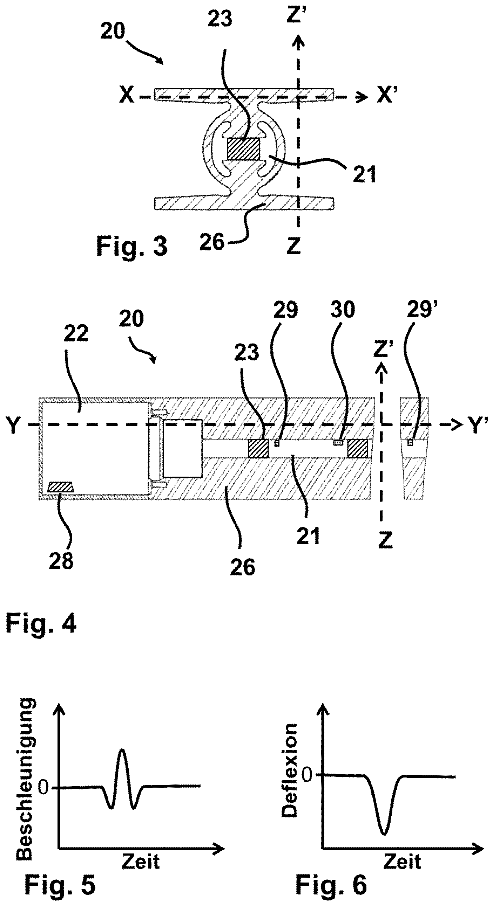

Der WIM Sensor 20 ist, wie in Fig. 1 und Fig. 4 gezeigt, ein lang ausgestaltetes Profil 26 mit einem oder mehreren Räumen 21, 22. Unter einem Raum 21, 22 wird ein teilweise oder gänzlich durch das Profil 26 umschlossener Bereich verstanden, der ganz oder teilweise über die Längsachse YY' des Profils 26 vorhanden ist. Des Weiteren kann ein Raum 22 neben oder unter dem in Fig. 3 gezeigten Profil 26 angeordnet sein, oder, wie in Fig. 4 gezeigt, an ein Ende bezüglich der Längsachse YY' des Profils 26 anschliessen.

Im Raum 21 ist mindestens ein Kraftsensor 23 zur Ermittlung einer Rad- oder Achslast angeordnet, welcher Kraftsensor 23 Kraftsensorsignale 100 aufnimmt und bereitstellt, wie in Fig. 3 und Fig. 4 dargestellt.

Bereitstellen eines Signals ist im Folgenden so zu verstehen, dass das bereitgestellte Signal für eine weitere Verwendung verfügbar ist. Bereitstellen beinhaltet so auch das Speichern des Signals auf einem elektronischen Spei-cher und das Laden des Signals aus diesem Speicher. Bereit-stellen beinhaltet auch das Darstellen des Signals auf einer Anzeige.

In bevorzugter Ausführungsform besteht ein Kraftsensor 23 aus mindestens einem piezoelektrischen Messelement mit Elektroden und mindestens einem Ladungsverstärker; welches piezoelektrisches Messelement bei einer Einwirkung einer Kraft eine Ladung generiert; welche Ladung mittels Elektroden an einem Ladungsverstärker verfügbar ist; welcher Ladungsverstärker die Ladung in ein Kraftsensorsignal 100 wandelt; welches Kraftsensorsignal 100 ein elektrisches Signal, bevorzugt eine elektrische Spannung, ist.

Selbstverständlich kann der Fachmann auch eine andere Ausführungsform eines Kraftsensors 23 wählen, wie einen Dehnungsmessstreifen oder ein piezoresistives Messelement oder ein anderes Messelement mit oder ohne elektrischen Verstärker oder ähnlicher elektrischer Schaltung, welches unter einer Einwirkung einer Kraft ein der Kraft entsprechendes Signal generiert und als Kraftsensorsignal 100 ausgibt.

Der Kraftsensor 23 weist in vorteilhafter Ausführungsform eine Sensitivität weitgehend senkrecht zur Fahrbahnoberfläche 6 und parallel zur Höhenachse ZZ' auf.

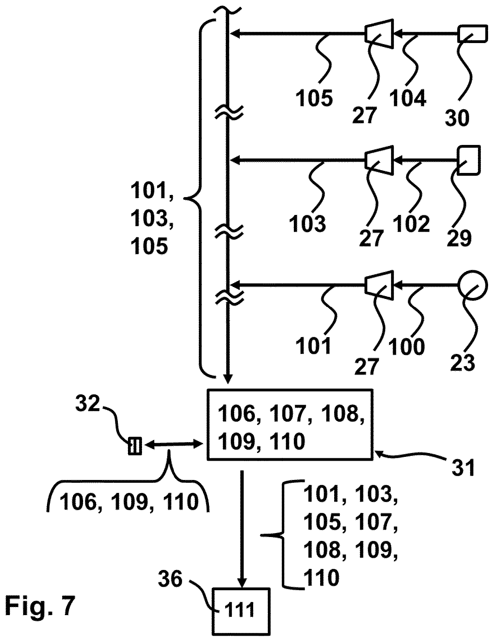

Fig. 7 zeigt ein Diagramm der Signale eines WIM Systems 19 mit den zum Verständnis wichtigen Komponenten des WIM Systems.

Im Fahrbahnabschnitt 1 ist vorteilhafterweise mindestens ein Beschleunigungssensor 29 angeordnet, wie in Fig. 4 dargestellt, welcher Beschleunigungssensor 29 Beschleunigungen in einer Raumrichtung aufnimmt und als Beschleunigungssensorsignal 102 bereitstellt.

In einer bevorzugten Ausführungsform ist der Beschleunigungssensor im Raum 21, 22 angeordnet, wie in Fig. 4 dargestellt.

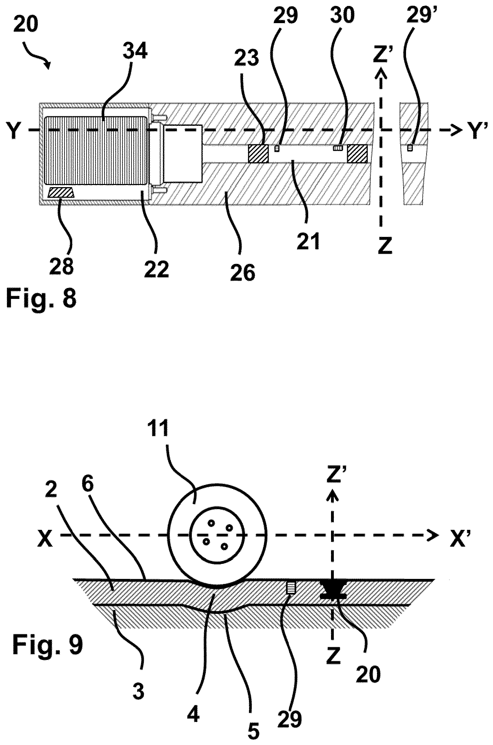

In einer weiteren bevorzugten Ausführungsform ist mindestens ein Beschleunigungssensor 29 im Fahrbahnbelag 2 vom Profil 26 senkrecht zur Längsachse XX' des Profils 26 beabstandet und mit der Fahrbahnoberfläche 6 eine Ebene bildend angeordnet, wie in Fig. 9 dargestellt.

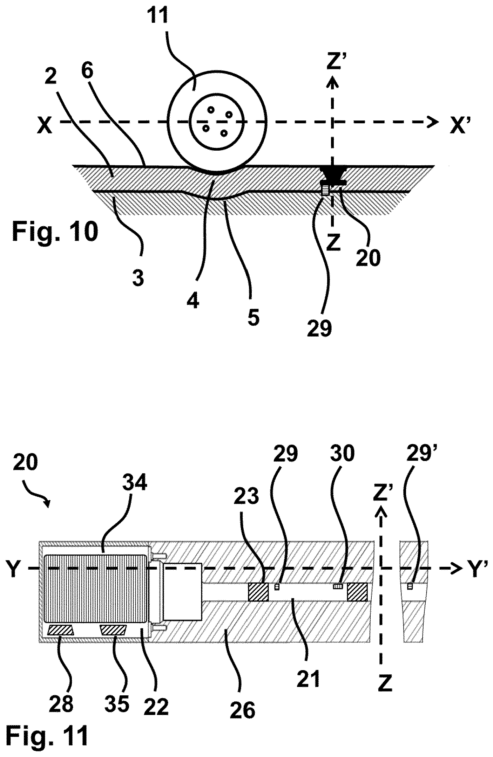

In einer weiteren bevorzugten Ausführungsform ist mindestens ein Beschleunigungssensor 29 unterhalb des Profils 26 bezüglich der Höhenachse ZZ' angeordnet, wie in Fig. 10 dargestellt.

Die Achse YY und die Y-Richtung entlang YY sind dadurch gegeben, dass X-Richtung, Y-Richtung und Z-Richtung ein Orthogonalsystem bilden.

Im Fahrbahnabschnitt 1 sind in bevorzugter Ausführungsform elektrische und elektronische Bauelemente, kurz elektronische Elemente, angeordnet; wobei mindestens elektronische Elemente im Fahrbahnabschnitt 1 angeordnet sind um ein Kraftsensorsignal 100 in ein digitales Kraftsensorsignal 101 zu wandeln und dieses bereitzustellen; und vorteilhafterweise mindestens elektronische Elemente im Fahrbahnabschnitt 1 angeordnet sind um mindestens ein Beschleunigungssensorsignal 102 in ein digitales Beschleunigungssensorsignal 103 zu wandeln und zur weiteren Verwendung bereitzustellen.

Die nicht abschliessende Liste elektronischer Elemente umfasst in bevorzugter Ausführungsform mindestens eines der folgenden Elemente: Kraftsensor 23, Beschleunigungssensor 29, Temperatursensor 30, A/D Wandler 27, Signalübertragungselement 28.

In einer bevorzugten Ausführungsform ist mindestens ein A/D-Wandler 27 an einer der folgenden Positionen angeordnet: Im Raum 21, 22 oder im Gehäuse 9.

Selbstverständlich können auch elektronische Elemente mit verschiedenen Aufgaben in Form eines einzigen elektronischen Bauteils vorliegen, wie zum Bespiel einer anwendungsspezifischen integrierten Schaltung, kurz ASIC. Es können auch mehrere elektronische Elemente mit gleichartigen Aufgaben in Form eines einzigen elektronischen Bauteiles vorliegen.

Im Fahrbahnabschnitt 1 ist vorteilhafterweise mindesten ein Temperatursensor 30 angeordnet, welcher Temperatursensor 30 eine Temperatur aufnimmt und als Temperatursensorsignal 104 bereitstellt, wie in Fig. 4 und Fig. 7 und Fig. 8 dargestellt. In bevorzugter Ausführungsform ist der Temperatursensor im Fahrbahnbelag 2 oder im Raum 21, 22 angeordnet, wobei erstere Position nicht in den Figuren gezeigt ist.

Des Weiteren sind vorteilhafterweise mindestens ein A/D-Wandler 27 im Fahrbahnabschnitt angeordnet, der mindestens ein Temperatursensorsignal 104 in ein digitales Temperatursensorsignal 105 wandelt und bereitstellt, wie in Fig. 7 gezeigt.

In bevorzugter Ausführungsform sind im Fahrbahnabschnitt 1 mindestens zwei Beschleunigungssensoren 29, 29' angeordnet, von welchen ein erster Beschleunigungssensor 29 eine Beschleunigung in Fahrtrichtung eines überfahrenden Rades 11, auch bezeichnet als X-Richtung entlang der Achse XX', aufnimmt, und von welchen ein zweiter Beschleunigungssensor 29' eine Beschleunigung in Höhenrichtung, auch bezeichnet als Z-Richtung entlang der Achse ZZ', aufnimmt, wie in Fig. 4 und 8 anhand einer bevorzugten Ausführungsform dargestellt. Die jeweiligen Beschleunigungssensorsignale 102 sind als digitales Beschleunigungssensorsignal 103 in X-Richtung und als digitales Beschleunigungssensorsignal 103 in Z-Richtung bereitgestellt.

Fährt ein Fahrzeug 10 auf dem Fahrbahnabschnitt 1, so bewirkt die Radlast des überfahrenden Rades 11 eine dynamische Deflexion des Fahrbahnbelags 2 und des Fahrbahnuntergrunds 3, welche als Verformung 4, 5 in Fig. 2 dargestellt sind. Diese dynamische Deflexion ist als Beschleunigung messbar.

In Fig. 5 ist ein typisches Beschleunigungssensorsignal 102 einer Beschleunigung in Z-Richtung des Fahrbahnbelags 2 bei der Überfahrt eines Rades 11 in Abhängigkeit der Zeit dargestellt.

Im Strassenabschnitt 1 sind in bevorzugter Ausführungsform mindestens ein Mikroprozessor 31 und mindestens ein nicht flüchtiges Speicherelement 32 angeordnet, wie in Fig. 7 gezeigt.

In einer bevorzugten Ausführungsform ist der Mikroprozessor an einer der folgenden Positionen angeordnet: Im Raum 21, 22 oder im Gehäuse 9.

Im Mikroprozessor 31 wird vorteilhafterweise das digitale Beschleunigungssensorsignal 103 mit mindestens einem zugehörigen digitalen Kraftsensorsignal 101 und mindestens einem zugehörigen digitalen Temperatursensorsignal 105 erfasst und ausgewertet. Ein digitales Beschleunigungssensorsignal 103 ist einem digitalen Kraftsensorsignal 101 zugehörig, wenn es von dem gleichen Rad 11 erzeugt wurde. Ein digitales Temperatursensorsignal 105 ist einem digitalen Kraftsensorsignal 101 zugehörig, wenn die Erfassung des digitalen Temperatursensorsignals 105 zeitlich nicht mehr als eine Minute von der Erfassung des digitalen Kraftsensorsignals 101 entfernt ist. Die Zugehörigkeit eines digitalen Beschleunigungssensorsignals 103 zu einem digitalen Kraftsensorsignal 101 und eines digitalen Temperatursensorsignal 105 zu einem digitalen Kraftsensorsignal 101 wird durch einen Algorithmus bestimmt, wie in Fig. 7 gezeigt.

Mindestens ein digitales Beschleunigungssensorsignal 103 wird mittels eines Algorithmus ausgewertet.

Auf dem nicht flüchtigen Speicherelement 32 ist mindestens ein Algorithmus gespeichert, welcher in den Mikroprozessor 31 geladen wird.

Der Algorithmus vergleicht das digitale Beschleunigungssensorsignal 103 in Z-Richtung und das digitale Beschleunigungssensorsignal 103 in X-Richtung mit mindestens einer charakteristischen Signatur für eine Präsenz eines überfahrenden Rades 11 in der Nähe des Beschleunigungssensors 29, 29' und erzeugt daraus eine Präsenzinformation 107. Eine charakteristische Signatur ist mindestens eine bekannte und im nicht flüchtigen Speicherelement 32 gespeicherte, vorgängig definierte Amplitude des digitalen Beschleunigungssensorsignals 103. Die charakteristische Signatur wird in den Mikroprozessor 31 geladen. Findet der Algorithmus im Vergleich zwischen der geladenen charakteristischen Signatur und dem digitalen Beschleunigungssensorsignal 103 eine Übereinstimmung, so ist eine Präsenz eines Rades 11 über dem Beschleunigungssensor 29, 29' ermittelt und der Algorithmus bildet eine positive Präsenzinformation 107. Liegt keine Übereinstimmung vor oder liegt keine Übereinstimmung mehr vor, so bildet der Algorithmus eine negative Präsenzinformation 107.

Ein weiterer Algorithmus berechnet aus dem digitalen Beschleunigungssensorsignal 103 in Z-Richtung die Deflexion des Fahrbahnbelags 2 und stellt diese als Deflexionsinformation 109 bereit. Die Deflexion des Fahrbahnbelags 2 ist dabei die zweifache Integration des digitalen Beschleunigungssensorsignals 103 über die Zeit, in der eine Beschleunigung in eine positive Z-Richtung oder eine negative Z-Richtung vorliegt. Eine typische Deflexion des Fahrbahnbelags 2 in Abhängigkeit der Zeit ist in Fig. 6 dargestellt. Die Deflexionsinformation 109 ist eine mathematische Funktion mit der Zeit als Variable und ist mindestens als Polynom (beispielsweise ein Taylorpolynom) endlichen Grades darstellbar, mit je einem Koeffizienten für jede Potenz der Variable, mit der Zeit als Variable. Der Algorithmus bildet das Polynom der Deflexionsinformation 109, mit den Koeffizienten als Deflexionsparameter 110. Die Deflexionsparameter 110 werden durch den Algorithmus bereitgestellt.

Der Fachmann kann natürlich auch eine andere Darstellung der Deflexionsinformation 109 als mathematische Funktion wählen. Für jede Funktion kann der Fachmann Deflexionsparameter 110 bestimmen, welche in die mathematische Funktion als mathematische Parameter der Funktion eingebracht sind und mit der Variable (Zeit) die Deflexionsinformation 109 ergeben.

Durch den Algorithmus werden die Deflexionsparametern 110 in eine weitere mathematische Funktion eingebracht, welche das digitale Kraftsensorsignal 101 als Variable aufweist und ein korrigiertes Kraftsensorsignal 108 bildet und bereitstellt. Die weitere mathematische Funktion minimiert den Einfluss der Deflexion des Fahrbahnbelags und des Fahrbahnuntergrunds 3 auf die Messgenauigkeit des Kraftsensors 23. Der Kraftsensor weist mehrheitlich eine Sensitivität senkrecht zur Fahrbahnoberfläche 6, parallel zur Höhenrichtung ZZ', auf. Die Deflexion des Fahrbahnbelags 2 und des Fahrbahnuntergrunds 3 in Höhenrichtung ZZ' ist durch den im Fahrbahnabschnitt 1 angeordneten Beschleunigungssensor 29 mit einer Sensitivität in Höhenrichtung ZZ' als Deflexionsinformation 109 oder Deflexionsparameter 110 verfügbar. Der Algorithmus bringt die Deflexionsparameter 110 in die weitere mathematische Funktion ein. Die mathematische Funktion ist anhand einer vorgängig bestimmten Abhängigkeit der ermittelten Kraft von der Deflexion des Fahrbahnbelags 2 und des Fahrbahnuntergrunds 3 so gewählt, dass sie mit den Deflexionsparametern 110 den Einfluss der Deflexion des Fahrbahnbelags 2 und des Fahrbahnuntergrunds 3 auf das korrigierte Kraftsensorsignal 108 minimiert, so dass das Nachgeben des Fahrbahnbelags 2 oder Fahrbahnintergrunds 3 unter Wirkung einer Kraft die Bestimmung der Radlast nicht verfälscht.

Die weitere mathematische Funktion wird bevorzugt mit einer aus der numerischen Mathematik bekannten Polynominterpolation als Interpolationspolynom bestimmt. Dabei werden zunächst definierte Kräfte auf den Fahrbahnbelag über dem Beschleunigungssensor und auf den WIM Sensor ausgeübt. Das Interpolationspolynom ist die Funktion, welches mit dem digitalen Kraftsensorsignal 101 als Variable die ausgeübten Kräfte ergibt.

Durch das korrigierte Kraftsensorsignal 108 ist der Einfluss der Deflexion des Fahrbahnbelags 2 auf die die Bestimmung der Radlast minimiert wodurch die Messgenauigkeit des WIM Systems 20 erhöht wird.

In vorteilhafter Ausführungsform wird vor der Bildung des korrigierten Kraftsensorsignals 108 der Einfluss der Temperatur auf das digitale Kraftsensorsignal 101 mittels einer bekannten und auf dem nicht flüchtigen Speicherelement 32 gespeicherten Temperaturabhängigkeit des Kraftsensors 23 korrigiert. Die Temperaturabhängigkeit ist dabei ein von der Temperatur abhängiger Faktor, welcher für diese Korrektur mit dem digitalen Kraftsensorsignal multipliziert wird. Korrigieren der Temperaturabhängigkeit eines digitalen Kraftsensorsignals 101 auf Grund der Temperatur des Kraftsensors 23 ist eine lang bekannte Methode, auf die nicht weiter eingegangen wird.

Die Bestimmung der Radlast erfolgt dabei in einem externen Auswertelement 36 auf Grund mindestens eines korrigierten Kraftsensorsignals 108 und der Geschwindigkeit eines überfahrenden Rades 11. Die Geschwindigkeit wird durch einen Algorithmus im externen Auswerteelement 36 auf Grund der Laufzeit des Rades zwischen zwei, im Fahrbahnabschnitt 1 in Fahrtrichtung des Rades 11 beabstandeten WIM Sensoren 20, 20' berechnet.

Der WIM Sensor 20 weist in einer Ausführungsform ein elektronisches Signalübertragungselement 28 auf; wobei in einer ersten Ausführungsform an dem elektronischen Signalübertragungselement 28 ein Anschlusselement für einen Leiter angeordnet ist, wobei ein Leiter zur Übermittlung von im WIM Sensor bereitgestellten Signalen an einen externen Empfänger genutzt werden; wobei in einer zweiten Ausführungsform an dem Signalübertragungselement 28 ein Sender und Empfänger für elektromagnetische Wellen angeordnet ist; wobei das Signalübertragungselement 28 im WIM Sensor 20 bereitgestellte Signale durch elektromagnetische Wellen an einen externen Empfänger überträgt. Ein externer Empfänger kann beispielsweise ein im Gehäuse angeordneter A/D-Wandler 27 oder Mikroprozessor 31 sein. Ein externer Empfänger kann auch ein externes Auswerteelement 36 sein. Ein externes Auswerteelement 36 ist beispielsweise ein Laptop oder einen Personal Computer oder eine dezentrale IT-Infrastruktur.

In einer weiteren Ausführungsform ist im Fahrbahnabschnitt, in bevorzugter Ausführungsform im Gehäuse 9 oder im Raum 21, 22, mindestens eine Energieversorgung 34 angeordnet, wie in Fig. 8 beispielhaft gezeigt ist; wobei die Energieversorgung 34 mindestens ein im Fahrbahnabschnitt angeordnetes elektronisches Element mit elektrischer Energie versorgt.

In einer Ausführungsform des WIM Systems 19 ist die Energieversorgung 34 die einzige Quelle für elektrische Energie des WIM Systems 19. In einer weiteren Ausführungsform ist die Energieversorgung 34 eine zusätzliche Quelle für elektrische Energie des WIM Systems 19, beispielsweise eine unterbrechungsfreie Stromversorgung oder eine allgemeine Ersatzstromversorgung; wobei letztere im Falle eines Ausfalles der Netzspannung einen kurzen Unterbruch der Stromversorgung bedeutet bevor die Energieversorgung 34 automatisch einsetzt.

Wird die Versorgung eines elektronischen Elements mit elektrischer Energie beendet, so wird dies im Folgenden als ausschalten der Energieversorgung 34 für das elektronisches Element bezeichnet, auch wenn die Energieversorgung 34 weitere elektronische Elemente gleichbleibend mit elektrischer Energie versorgt. Analog wird im Folgenden die Wiederaufnahme der Versorgung eines elektronischen Elements mit elektrischer Energie mit Einschalten der Energieversorgung 34 für das elektronisches Element bezeichnet.

In vorteilhafter Ausführungsform versorgt die Energieversorgung mindestens ein im Fahrbahnabschnitt 1 angeordnetes elektronisches Element mit elektrischer Energie. Ein Algorithmus im Mikroprozessor 31 schaltet die Energieversorgung mindestens eines im Fahrbahnabschnitt 1 angeordneten elektronischen Elements ein oder aus oder versetzt mindestens ein im Fahrbahnabschnitt 1 angeordnetes elektronisches Element aus einem Betriebsmodus in einen Niedrigenergiemodus, in welchem Niedrigenergiemodus das elektronische Element einen verringerten Energiebedarf aufweist als im Betriebsmodus.

Im Folgenden wird ein Versetzen des elektronischen Elements in einen Niedrigenergiemodus als Reduktion der Energieversorgung 34 bezeichnet.

Die Energieversorgung 34 stellt elektrische Energie während einer Energieversorgungslaufzeit bereit, welche Energieversorgungslaufzeit endet, wenn die Energieversorgung 34 mehrheitlich entleert ist.

Durch den Algorithmus im Mikroprozessor 31 wird bei keiner erkannten Präsenz eines Rades 11 auf einem Fahrbahnabschnitt 1 die Energieversorgung mindestens eines im Fahrbahnabschnitt 1 angeordneten elektronischen Elements abgeschaltet oder reduziert, welches elektronische Element nicht für eine Erfassung einer Präsenz eines Rades 11 auf dem Fahrbahnabschnitt 1 notwendig ist. Bei einer erkannten Präsenz eines Rades 11 auf dem Fahrbahnabschnitt 1 wird die abgeschaltete oder reduzierte Energieversorgung 14 wieder eingeschaltet. Durch Abschaltung oder Reduktion der Energieversorgung 14 wird die Energieversorgungslaufzeit der Energieversorgung 14 verlängert. In vorteilhafter Ausführungsform erfolgt das Schalten oder Reduzieren der Energieversorgung 14 für mindestens ein im Fahrbahnabschnitt 1 angeordnetes elektronisches Element durch den Algorithmus auf Grund der Präsenzinformation 107.

In einer bevorzugten Ausführungsform des WIM Sensors 20 ist im Fahrbahnabschnitt 1 eine sogenannte Energy-Harvesting-Schaltung 35 angeordnet, welche die bei einer Krafteinwirkung generierten Ladungen eines im Raum 21 angeordneten piezoelektrischen Elements nutzt und für die Energieversorgung bereitstellt, wie in Fig. 11 gezeigt. Dies verlängert die Energieversorgungslaufzeit der Energieversorgung.

In einer weiteren bevorzugten Ausführungsform des WIM Sensors 20 wird in einem konfigurierbaren Zeitabstand mindestens ein digitales Beschleunigungssensorsignal 102 mit mindestens einem zugehörigen digitalen Kraftsensorsignal 101 und mit mindestens einem zugehörigen digitalen Temperatursensorsignal 104 und einem Zeitstempel 106 auf dem nicht flüchtigen Speicherelement 32 gespeichert, wobei ein Zeitstempel 106 aus einem Datum und einer Uhrzeit besteht und durch einen Algorithmus im Mikroprozessor 8 bereitgestellt wird und wobei ein Zeitstempel 106 aus einem Datum und einer Uhrzeit besteht und den Zeitpunkt der Erfassung des digitalen Beschleunigungssensorsignals 102 oder des digitalen Kraftsensorsignals 101 angibt

In einer weiteren bevorzugten Ausführungsform des WIM Sensors 20 werden die Deflexionsparameter 110 oder die Deflexionsinformation 109 in konfigurierbaren zeitlichen Abständen auf dem nicht flüchtigen Speicherelement 32 oder einem externen Auswerteelement 36 gespeichert. Die gespeicherte Information wird von einem weiteren Algorithmus aus dem nicht flüchtigem Speicherelement 32 oder einem externen Auswerteelement 36 abgerufen und der zeitliche Verlauf der Deflexionsinformation 109 oder der Deflexionsparameter 110 gebildet. Der Algorithmus errechnet mittels der mathematischen Methode der Extrapolation eine Prognose, wann die Deflexionsinformation 109 oder die Deflexionsparameter einen bestimmten, voreingestellten Deflexionswert erreicht. Der Algorithmus bildet die Zeitspanne bis zum prognostizierten Erreichen dieses Deflexionswertes als Zeitspanne bis zur nächsten Wartung des Fahrbahnabschnittes 1.

### Bezugszeichenliste

- 1: Fahrbahnabschnitt
- 2: Fahrbahnbelag
- 3: Fahrbahnuntergrund
- 4: Verformung
- 5: Verformung
- 6: Fahrbahnoberfläche
- 9: Gehäuse
- 10: Fahrzeug
- 11: Rad
- 20: WIM Sensor
- 21: Raum
- 22: Raum
- 23: Kraftsensor
- 26: Profil
- 27: A/D-Wandler
- 28: Signalübertragungselement
- 29: Beschleunigungssensor
- 30: Temperatursensor
- 31: Mikroprozessor
- 32: nicht flüchtiges Speicherelement
- 34: Energieversorgung
- 35: Energy-Harvesting-Schaltung
- 36: externes Auswerteelement
- 100: Kraftsensorsignal
- 101: Digitales Kraftsensorsignal
- 102: Beschleunigungssensorsignal
- 103: Digitales Beschleunigungssensorsignal
- 104: Temperatursensorsignal
- 105: Digitales Temperatursensorsignal
- 106: Zeitstempel
- 107: Präsenzinformation
- 108: korrigiertes Kraftsensorsignal
- 109: Deflexionsinformation
- 110: Deflexionsparameter
- 111: korrigierte Radlastinformation
- XX': Achse entlang der Fahrrichtung eines Fahrzeuges
- YY`: Achse senkrecht zur Fahrrichtung eines Fahrzeuges, parallel zur Fahrbahnoberfläche
- ZZ': Achse senkrecht zur Fahrbahnoberfläche

## Patentansprüche

1. WIM System (19) zur Ermittlung von Lasten von Fahrzeugen (10) auf einem Fahrbahnabschnitt (1) bei der Überfahrt eines Rades (11) eines Fahrzeuges (10) über einen WIM Sensor (20); welcher WIM Sensor (20) im Fahrbahnabschnitt (1) im Fahrbahnbelag (2) angeordnet ist und mit der Fahrbahnoberfläche (6) eine Ebene bildet; welcher WIM Sensor (20) mehrheitlich als ein entlang einer Längsachse (XX') lang ausgestaltetes Profil (26) mit mindestens einem Raum (21,22) ausgeführt ist; in welchem Raum (21,22) mindestens ein Kraftsensor (23) angeordnet ist; welcher Kraftsensor (23) ein Kraftsensorsignal (100) erzeugt; welches Kraftsensorsignal (100) einer dynamischen Bodenreaktionskraft bei Überfahrt des Rades (11) entspricht; wobei mindestens ein Beschleunigungssensor (29) eine Beschleunigung des Fahrbahnbelags (2) des Fahrbahnabschnitts (1), in welcher der WIM Sensor (20) angeordnet ist, in mindestens einer Raumrichtung erfasst und als Beschleunigungssensorsignal (102) bereitstellt; **dadurch gekennzeichnet, dass** das WIM System (19) einen Mikroprozessor (31) und mindestens ein nicht flüchtiges Speicherelement (32) aufweist; dass ein Algorithmus in das nichtflüchtige Speicherelement (32) gespeichert ist, welcher in den Mikroprozessor (31) ladbar ist; dass der Algorithmus ein vom Beschleunigungssensor (29) stammendes digitales Beschleunigungssensorsignal (103) nutzt und die Deflexion des Fahrbahnbelags (2) berechnet, welche Deflexion durch Deflexionsparameter (110) beschrieben ist; und dass der Algorithmus die Deflexionsparameter (110) und ein vom Kraftsensor (23) stammendes digitales Kraftsensorsignal (101) nutzt und ein korrigiertes Kraftsensorsignal (108) bildet und bereitstellt.

2. WIM System (19) nach Anspruch 1, **dadurch gekennzeichnet, dass** der Beschleunigungssensor (29) im Raum (21,22) angeordnet ist; oder dass der Beschleunigungssensor (29) unterhalb des Profils (26) bezüglich der Höhenachse (ZZ') angeordnet ist; oder dass der Beschleunigungssensor (29) im Fahrbahnbelag (2), vom Profil (26) senkrecht zur Längsachse (XX') des Profils (26) beabstandet, angeordnet ist.

3. WIM System (19) nach einem der Ansprüche 1 bis 2, **dadurch gekennzeichnet, dass** der Beschleunigungssensor (29) eine Sensitivität in Fahrtrichtung eines überfahrenden Fahrzeuges (10) aufweist; und dass der Beschleunigungssensor (29) eine Sensitivität entlang einer Achse (ZZ') senkrecht zur Fahrbahnoberfläche (6) aufweist.

4. WIM System (19) nach Anspruch 3, **dadurch gekennzeichnet, dass** der Beschleunigungssensor (29) mit einem A/D-Wandler (27) elektrisch verbunden ist; welcher A/D-Wandler (27) mindestens ein Beschleunigungssensorsignal (102) in ein digitales Beschleunigungssensorsignal (103) wandelt und bereitstellt; und dass mindestens ein Kraftsensor (100) mit einem A/D-Wandler (27) elektrisch verbunden ist; welcher A/D-Wandler ein Kraftsensorsignal (100) in ein digitales Kraftsensorsignal (101) wandelt und bereitstellt.

5. WIM System (19) nach Anspruch 4, **dadurch gekennzeichnet, dass** im Fahrbahnabschnitt (1) mindestens ein Temperatursensor (30) angeordnet ist; dass der Temperatursensor (30) ein Temperatursensorsignal (104) bereitstellt; dass der Temperatursensor (30) mit einem A/D-Wandler (27) verbunden ist; und dass der A/D-Wandler (27) das Temperatursensorsignal (104) in ein digitales Temperatursensorsignal (105) wandelt und bereitstellt.

6. WIM System (19) nach Anspruch 5, **dadurch gekennzeichnet, dass** im Fahrbahnabschnitt (1) mindestens ein Mikroprozessor (31) angeordnet ist; dass im Fahrbahnabschnitt (1) mindestens ein nicht flüchtiges Speicherelement (32) angeordnet ist; dass im Mikroprozessor (31) mindestens ein digitales Beschleunigungssensorsignal (102) mit mindestens einem zugehörigen digitalen Kraftsensorsignal (101) und einem zugehörigen digitalen Temperatursensorsignal (105) verfügbar ist; dass auf dem nicht flüchtigen Speicherelement (32) mindestens ein Algorithmus gespeichert ist; dass der Mikroprozessor (31) den Algorithmus aus dem nicht flüchtigen Speicherelement (32) lädt; dass der Mikroprozessor (31) das digitale Beschleunigungssensorsignal (102) mit dem Algorithmus auswertet; dass der Mikroprozessor (31) das digitale Kraftsensorsignal (101) mit dem Algorithmus auswertet; dass der Mikroprozessor (31) das digitale Temperatursensorsignal (105) mit dem Algorithmus auswertet; und dass der Algorithmus die Auswertung als korrigiertes Kraftsensorsignal (108) bereitstellt.

7. WIM System (19) nach Anspruch 6, **dadurch gekennzeichnet, dass** am oder im Profil (26) mindestens ein Signalübertragungselement (28) angeordnet ist; wobei das Signalübertragungselement (28) mindestens ein Kraftsensorsignal (100) oder mindestens ein digitales Kraftsensorsignal (101) an einen ausserhalb des WIM Sensors (20) befindlichen Empfänger überträgt; welcher Empfänger ein Mikroprozessor (31) oder ein im Fahrbahnabschnitt (1) angeordnetes externes Auswerteelement (36) ist; wobei die Übertragung mittels mindestens eines elektrischen Leiters oder mittels elektromagnetischer Wellen erfolgt.

8. WIM System (19) nach einem der Ansprüche 6 bis 7, **dadurch gekennzeichnet, dass** das nicht flüchtige Speicherelement (32) in einem konfigurierbaren Zeitabstand mindestens ein digitales Beschleunigungssensorsignal (102) mit mindestens einem zugehörigen digitalen Kraftsensorsignal (101) und mit mindestens einem zugehörigen digitalen Temperatursensorsignal (104) und mit einem Zeitstempel (106) speichert, wobei ein Zeitstempel (106) den Zeitpunkt der Erfassung des digitalen Beschleunigungssensorsignals (102) oder des digitalen Kraftsensorsignals (101) angibt.

9. WIM System (19) nach einem der Ansprüche 6 bis 8, **dadurch gekennzeichnet, dass** im Fahrbahnabschnitt (1) eine Energieversorgung (34) angeordnet ist; dass die Energieversorgung (34) mindestens ein im Fahrbahnabschnitt (1) angeordnetes elektronisches Element mit elektrischer Energie versorgt, wobei ein elektronisches Element mindestens eines der folgenden Elemente ist: Kraftsensor (23), Beschleunigungssensor (29), Temperatursensor (30), A/D Wandler (27); dass ein Algorithmus im Mikroprozessor (31) die Energieversorgung (34) mindestens eines im Fahrbahnabschnitt (1) angeordneten elektronischen Elements einschaltet oder ausschaltet oder reduziert; welche Reduktion mindestens ein im Fahrbahnabschnitt (1) angeordnetes elektronisches Element aus einem Betriebsmodus in einen Niedrigenergiemodus versetzt, in welchem Niedrigenergiemodus das elektronische Element einen verringerten Energiebedarf aufweist als im Betriebsmodus; dass die Energieversorgung (34) elektrische Energie während einer Energieversorgungslaufzeit bereitstellt, welche Energieversorgungslaufzeit endet wenn die Energieversorgung (34) mehrheitlich entleert ist; und dass das Ausschalten oder Reduzieren der Energieversorgung (34) eines elektronischen Elements die Energieversorgungslaufzeit verlängert.

10. WIM System (19) nach Anspruch 9, **dadurch gekennzeichnet, dass** im Fahrbahnabschnitt (1) eine Energy-Harvesting-Schaltung (35) angeordnet ist, welche bei einer Krafteinwirkung generierte Ladungen eines im Raum (21) angeordneten piezoelektrischen Elements nutzt und für die Energieversorgung (34) bereitstellt.

11. Verfahren zur Auswertung eines digitalen Beschleunigungssensorsignals (103) eines im Fahrbahnabschnitt (1) angeordneten Beschleunigungssensors (29) zur Erhöhung der Messgenauigkeit eines im gleichen Fahrbahnabschnitt (1) angeordneten WIM Sensors (20) nach einem der Ansprüche 6 bis 10, **dadurch gekennzeichnet, dass** der Algorithmus mittels mindestens eines digitalen Beschleunigungssensorsignals (103) eine Deflexion des Fahrbahnbelags (2) an der Position des Beschleunigungssensors (29) als zweifache Integration des Beschleunigungssensorsignals (103) über die Zeit berechnet, welche Deflexion eine reversible Auslenkung des Fahrbahnbelags (2) und Fahrbahnuntergrunds (3) aus einer Gleichgewichtsposition unter Einwirkung einer Kraft ist; dass der Algorithmus die Deflexion als Deflexionsinformation (109) bereitstellt; dass der Algorithmus die Deflexionsinformation (109) als mathematische Funktion bereitstellt, welche mathematische Funktion Deflexionsparameter (110) und die Zeit als Variable beinhaltet.

12. Verfahren nach Anspruch 11, **dadurch gekennzeichnet, dass** der Algorithmus die Deflexionsparameter (110) in eine weitere mathematische Funktion einbringt; dass die weitere mathematische Funktion das digitale Kraftsensorsignal (101) als Variable aufweist; dass der Algorithmus mit der weitere mathematischen Funktion, ein korrigiertes digitales Kraftsensorsignal (108) bildet; dass die weitere mathematische Funktion den Einfluss der Deflexion des Fahrbahnbelags (2) und des Fahrbahnuntergrunds (3) auf das korrigierte Kraftsensorsignal (108) minimiert.

13. Verfahren nach einem der Ansprüche 11 bis 12, **dadurch gekennzeichnet, dass** der Algorithmus die Deflexionsinformation (109) mit dem zugehörigen digitalen Kraftsensorsignal (101) und dem zugehörigen digitalen Temperatursensorsignal (105) zu einem durch einen Nutzer vorgegebenen Zeitpunkt zusammen mit einem Zeitstempel (106) auf dem nicht flüchtigen Speicherelement (32) oder dem externen Auswerteelement (36) speichert.

14. Verfahren nach Anspruch 13, **dadurch gekennzeichnet, dass** der Algorithmus gespeicherte Deflexionsinformationen (109) aus dem nicht flüchtigem Speicherelement (32) oder dem externen Auswerteelement (36) lädt und den zeitlichen Verlauf der Deflexionsinformationen (109) bildet; dass der Algorithmus eine Zeitspanne durch Extrapolation errechnet, wann die Deflexionsinformation (109) einen bestimmten, vorgängig eingestellten Wert erreicht; und dass der Algorithmus die Zeitspanne bis zum Erreichen dieses vorgängig eingestellten Wertes als Zeitspanne bis zur nächsten Wartung des Fahrbahnabschnittes (1) bildet.

15. Verfahren nach einem der Ansprüche 11 bis 14, **dadurch gekennzeichnet, dass** der Algorithmus mindestens ein digitales Beschleunigungssensorsignal (103) mit mindestens einer charakteristischen Signatur für eine Präsenz eines Fahrzeuges (10) über dem Beschleunigungssensor (29) vergleicht; dass eine charakteristische Signatur mindestens eine bekannte und im nicht flüchtigen Speicherelement (32) gespeicherte, vorgängig definierte Amplitude des digitalen Beschleunigungssensorsignals (103) ist; dass der Algorithmus bei einer gefundene charakteristischen Signatur eine positive Präsenzinformation (107) erzeugt; dass eine positive Präsenzinformation (107) die Präsenz eines Fahrzeuges (10) auf dem Fahrbahnabschnitt (1) anzeigt; und dass der Algorithmus das Einschalten, Ausschalten oder Reduzieren der Energieversorgung (34) eines elektronischen Elements auf Grund der positiven oder negativen Präsenzinformation (107) vornimmt.

## Claims

1. A WIM system (19) for detecting loads of vehicles (10) on a roadway segment (1) during crossing of a wheel (11) of a vehicle (10) over a WIM sensor (20); which WIM sensor (20) is arranged in the roadway segment (1) in the road surface (2) flush with the roadway surface (6); which WIM sensor (20) is more or less formed as an elongated profile (26) along a longitudinal axis (XX') having at least one space (21, 22); in which space (21, 22) is arranged at least one force sensor (23); said force sensor (23) generating a force sensor signal (100); which force sensor signal (100) corresponds to a dynamic ground reaction force to the crossing wheel (11); wherein at least one acceleration sensor (29) detects an acceleration of the road surface (2) of the roadway segment (1) in which the WIM sensor (20) is arranged in at least one spatial direction which it provides as the acceleration sensor signal (102); **characterized in that** said WIM system (19) comprises a microprocessor (31) and at least one non-volatile memory element (32); that an algorithm is stored in said non-volatile memory element (32) which can be loaded into the microprocessor (31); said algorithm uses a digital acceleration sensor signal (103) from the acceleration sensor (29) and calculates the deflection of the road surface (2), said deflection being defined by deflection parameters (110); and **in that** the algorithm uses the deflection parameters (110) and a digital force sensor signal (101) from the force sensor (23) and calculates and provides a corrected force sensor signal (108).

2. The WIM system (19) according to claim 1, **characterized in that** the acceleration sensor (29) is arranged in the space (21,22); or the acceleration sensor (29) is arranged below the profile (26) with respect to the height axis (ZZ'); or the acceleration sensor (29) is arranged in the road surface (2) spaced apart from the profile (26) in a direction perpendicular to the longitudinal axis (XX') of the profile (26).

3. The WIM system (19) according to any of claims 1 to 2, **characterized in that** the acceleration sensor (29) has a sensitivity in the direction of travel of a crossing vehicle (10); and **in that** the acceleration sensor (29) has a sensitivity along an axis (ZZ') perpendicular to the roadway surface (6).

4. The WIM system (19) according to claim 3, **characterized in that** the acceleration sensor (29) is electrically connected to an A/D converter (27); which A/D converter (27) converts at least one acceleration sensor signal (102) into a digital acceleration sensor signal (103) which it provides; and at least one force sensor (100) is electrically connected to an A/D converter (27); which A/D converter converts a force sensor signal (100) into a digital force sensor signal (101) which it provides.

5. The WIM system (19) according to claim 4, **characterized in that** at least one temperature sensor (30) is arranged in the roadway segment (1); the temperature sensor (30) provides a temperature sensor signal (104); the temperature sensor (30) is connected to an A/D converter (27); and **in that** the A/D converter (27) converts the temperature sensor signal (104) into a digital temperature sensor signal (105) which it provides.

6. The WIM system (19) according to claim 5, **characterized in that** at least one microprocessor (31) is arranged in the roadway segment (1); at least one non-volatile memory element (32) is arranged in the roadway segment (1); at least one digital acceleration sensor signal (102) having at least one associated digital force sensor signal (101) and one associated digital temperature sensor signal (105) is available in the microprocessor (31); at least one algorithm is stored on the non-volatile memory element (32); said microprocessor (31) loads the algorithm from the non-volatile memory element (32); said microprocessor (31) evaluates the digital acceleration sensor signal (102) by means of the algorithm; said microprocessor (31) evaluates the digital force sensor signal (101) by means of the algorithm; said microprocessor (31) evaluates the digital temperature sensor signal (105) by means of the algorithm; and **in that** the algorithm provides the evaluation as the corrected force sensor signal (108).

7. The WIM system (19) according to claim 6, **characterized in that** at least one signal transmission element (28) is arranged on or in the profile (26); wherein the signal transmission element (28) transmits at least one force sensor signal (100) or at least one digital force sensor signal (101) to a receiver located externally to the WIM sensor (20); which receiver is a microprocessor (31) or an external evaluation element (36) arranged in the roadway segment (1); wherein said transmission is done by means of at least one electrical conductor or by means of electromagnetic waves.

8. The WIM system (19) according to any of claims 6 to 7, **characterized in that** the non-volatile memory element (32) stores at a customizable time interval at least one digital acceleration sensor signal (102) with at least one associated digital force sensor signal (101) and at least one associated digital temperature sensor signal (104) and with a time stamp (106), wherein a time stamp (106) indicates the time of the detection of the digital acceleration sensor signal (102) or the digital force sensor signal (101).

9. The WIM system (19) according to any of claims 6 to 8, **characterized in that** a power supply (34) is arranged in the roadway segment (1); said power supply (34) supplies electrical energy to at least one electronic element arranged in the roadway segment (1), wherein an electronic element is at least one of the following elements: force sensor (23), acceleration sensor (29), temperature sensor (30), A/D converter (27); **in that** the power supply (34) of at least one electronic element located in the roadway segment (1) is switched on or off or reduced by an algorithm in the microprocessor (31); wherein by said reducing at least one electronic element arranged in the roadway segment (1) is changed from an operating mode to a low-energy mode, in which low-energy mode the electronic element has a reduced energy requirement compared to the operating mode; said power supply (34) provides electrical energy over a power supply period, which power supply period ends when the power supply (34) is more or less exhausted; and **in that** switching off or reducing the power supply (34) of an electronic element extends the power supply period.

10. The WIM system (19) according to claim 9, **characterized in that** an energy harvesting circuit (35) is arranged in the roadway segment (1) which utilizes charges generated by a piezoelectric element arranged in the space (21) upon the action of a force and provides them for power supply (34).

11. A method for evaluating a digital acceleration sensor signal (103) of an acceleration sensor (29) arranged in the roadway segment (1) for increasing the measurement accuracy of a WIM sensor (20) according to any of claims 6 to 10 arranged in the same roadway segment (1), **characterized in that** by using at least one digital acceleration sensor signal (103) the algorithm calculates a deflection of the road surface (2) at the position of the acceleration sensor (29) in the form of an integration of the acceleration sensor signal (103) over time twice, which deflection is a reversible displacement of the road surface (2) and the road subsurface (3) from an equilibrium position under the action of a force; the algorithm provides the deflection as deflection information (109); the algorithm provides the deflection information (109) as a mathematical function which mathematical function includes deflection parameters (110) and time as a variables.

12. The method according to claim 11, **characterized in that** the algorithm introduces the deflection parameters (110) in a further mathematical function; said further mathematical function comprises the digital force sensor signal (101) as a variable; the algorithm gives a corrected digital force sensor signal (108) with the further mathematical function; the further mathematical function minimizes the effect of the deflection of the road surface (2) and the road subsurface (3) on the corrected force sensor signal (108).

13. The method according to any of claims 11 to 12, **characterized in that** the algorithm stores the deflection information (109) with the associated digital force sensor signal (101) and the associated digital temperature sensor signal (105) at a point of time predetermined by a user together with a time stamp (106) on the non-volatile memory element (32) or the external evaluation element (36) .

14. The method according to claim 13, **characterized in that** the algorithm loads stored deflection information (109) from the non-volatile memory element (32) or the external evaluation element (36) and provides the time course of the deflection information (109); by means of extrapolation the algorithm calculates a period of time at which the deflection information (109) will reach a certain preset value; and the algorithm gives the period of time until this preset value will be reached as the period of time until the next maintenance of the roadway segment (1).

15. The method according to any of claims 11 to 14, **characterized in that** the algorithm compares at least one digital acceleration sensor signal (103) to at least one characteristic signature for a presence of a vehicle (10) above the acceleration sensor (29); a characteristic signature is at least one known predefined amplitude of the digital acceleration sensor signal (103) stored in the non-volatile memory element (32); if a characteristic signature is found the algorithm generates a positive presence information (107); a positive presence information (107) indicates the presence of a vehicle (10) on the roadway segment (1); and **in that** the algorithm carries out the switching on, switching off or reducing of the power supply (34) of an electronic element on the basis of the positive or negative presence information (107).

## Revendications

1. Système WIM (19) pour la mesure des charges de véhicules (10) sur un segment de route (1) lors d'un passage d'une roue (11) d'un véhicule (10) sur un capteur WIM (20); lequel capteur WIM (20) étant disposé dans le segment de route (1) dans le revêtement routier (2) au ras de la surface routier (6); lequel capteur WIM (20) étant plus ou moins formé comme un profil allongé (26) le long d'un axe longitudinal (XX') avec au moins un espace (21, 22); dans lequel au moins un capteur de force (23) est disposé dans l'espace (21, 22); ledit capteur de force (23) générant un signal de capteur de force (100); dans lequel ledit signal de capteur de force (100) correspond à une force de réaction dynamique du sol à la roue (11) lors du passage; dans lequel au moins un capteur d'accélération (29) détecte une accélération dans au moins une direction spatiale du revêtement routier (2) du segment de route (1) dans lequel le capteur WIM (20) est disposé qu'il fournit comme signal de capteur d'accélération (102), **caractérisé en ce que** ledit système WIM (19) comprend un microprocesseur (31) et au moins un élément de mémoire non volatile (32); qu'un algorithme est stocké dans ledit élément de mémoire non volatile (32) qui peut être chargé dans le microprocesseur (31); que ledit algorithme utilise un signal numérique de capteur d'accélération (103) provenant du capteur d'accélération (29) et calcule la déformation du revêtement routier (2), ladite déformation étant définie par des paramètres de déformation (110); et **en ce que** l'algorithme utilise les paramètres de déformation (110) et un signal numérique de capteur de force (101) provenant du capteur de force (23) et calcule un signal corrigé de capteur de force (108) qu'il fournit.

2. Système WIM (19) selon la revendication 1, **caractérisé en ce que** le capteur d'accélération (29) est disposé dans l'espace (21,22); ou le capteur d'accélération (29) est disposé sous le profil (26) par rapport à l'axe de hauteur (ZZ'); ou le capteur d'accélération (29) est disposé dans le revêtement routier (2) espacé du profil (26) dans une direction du profil (26) perpendiculaire à l'axe longitudinal (XX').

3. Système WIM (19) selon l'une quelconque des revendications 1 à 2, **caractérisé en ce que** le capteur d'accélération (29) présente une sensibilité au sens de marche d'un véhicule (10) traversant; et **en ce que** le capteur d'accélération (29) a une sensibilité le long d'un axe (ZZ') qui est perpendiculaire à la surface routier (6).

4. Système WIM (19) selon la revendication 3, **caractérisé en ce que** le capteur d'accélération (29) est connecté électriquement à un convertisseur A/N (27); lequel convertisseur A/N (27) convertit au moins un signal de capteur d'accélération (102) en un signal numérique de capteur d'accélération (103) qu'il fournit; et **en ce qu'**au moins un capteur de force (100) est connecté électriquement à un convertisseur A/N (27); lequel convertisseur A/N convertit un signal de capteur de force (100) en un signal numérique de capteur de force (101) qu'il fournit.

5. Système WIM (19) selon la revendication 4, **caractérisé en ce qu**'au moins un capteur de température (30) est disposé dans le segment de route (1); que le capteur de température (30) fournit un signal de capteur de température (104); que le capteur de température (30) est connecté à un convertisseur A/N (27); et en ce que le convertisseur A/N (27) convertit le signal de capteur de température (104) en un signal numérique de capteur de température (105) qu'il fournit.

6. Système WIM (19) selon la revendication 5, **caractérisé en ce qu**'au moins un microprocesseur (31) est disposé dans le segment de route (1); qu'au moins un élément de mémoire non volatile (32) est disposé dans le segment de route (1); qu'au moins un signal numérique de capteur d'accélération (102) est disponible dans le microprocesseur (31) avec au moins un signal numérique de capteur de force (101) associé et un signal numérique de capteur de température (105) associé; qu'au moins un algorithme est stocké sur l'élément de mémoire non volatile (32); que ledit microprocesseur (31) charge l'algorithme à partir de l'élément de mémoire non volatile (32); que ledit microprocesseur (31) évalue le signal numérique de capteur d'accélération (102) au moyen de l'algorithme; que ledit microprocesseur (31) évalue le signal numérique de capteur de force (101) au moyen de l'algorithme; que ledit microprocesseur (31) évalue le signal numérique de capteur de température (105) au moyen de l'algorithme; et en ce que l'algorithme fournit l'évaluation en tant que signal corrigé du capteur de force (108).

7. Système WIM (19) selon la revendication 6, **caractérisé en ce qu**'au moins un élément de transmission de signal (28) est disposé sur ou dans le profil (26); dans lequel ledit élément de transmission de signal (28) transmet au moins un signal de capteur de force (100) ou au moins un signal numérique de capteur de force (101) à un récepteur situé à l'extérieur du capteur WIM (20); lequel récepteur est un microprocesseur (31) ou un élément d'évaluation externe (36) disposé dans le segment de route (1); dans lequel ladite transmission se fait au moyen d'au moins un conducteur électrique ou au moyen d'ondes électromagnétiques.

8. Système WIM (19) selon l'une quelconque des revendications 6 à 7, **caractérisé en ce que** l'élément de mémoire non volatile (32) stocke à un intervalle de temps configurable au moins un signal numérique de capteur d'accélération (102) avec au moins un signal numérique de capteur de force (101) associé et au moins un signal numérique de capteur de température (104) associé et avec un horodatage (106), dans lequel un horodatage (106) indique le moment de la détection du signal numérique de capteur d'accélération (102) ou du signal numérique de capteur de force (101).

9. Système WIM (19) selon l'une quelconque des revendications 6 à 8, **caractérisé en ce qu**'une alimentation électrique (34) est disposée dans le segment de route (1); ladite alimentation électrique (34) fournit de l'énergie électrique à au moins un élément électronique agencé dans le segment de route (1), dans lequel un élément électronique est au moins l'un des éléments suivants: capteur de force (23), capteur d'accélération (29), capteur de température (30), convertisseur A/N (27); en ce qu'un algorithme dans le microprocesseur (31) mit en marche ou arrête ou réduit l'alimentation électrique (34) d'au moins un élément électronique agencé dans le segment de route (1); dans lequel ladite réduction fait passer au moins un élément électronique agencé dans le segment de route (1) d'un état de fonctionnement à un état à faible consommation d'énergie, dans lequel l'élément électronique, dans ledit état à faible consommation d'énergie, a un besoin énergétique réduit par rapport à son état de fonctionnement; en ce que ladite alimentation électrique (34) fournit de l'énergie électrique pendant une durée d'alimentation électrique, laquelle durée d'alimentation électrique se termine lorsque l'alimentation électrique (34) est plus ou moins épuisée; et en ce que l'arrêt ou la réduction de l'alimentation électrique (34) d'un élément électronique prolonge la durée d'alimentation électrique.

10. Système WIM (19) selon la revendication 9, **caractérisé en ce que** dans le segment de route (1) est agencé un circuit de récupération d'énergie (35) qui utilise des charges générées par un élément piézoélectrique disposé dans l'espace (21) sous l'action d'une force et les fournit pour l'alimentation électrique (34).

11. Procédé pour évaluer un signal numérique de capteur d'accélération (103) d'un capteur d'accélération (29) disposé dans le segment de route (1) pour obtenir une précision de mesure plus élevée d'un capteur WIM (20) selon l'une quelconque des revendications 6 à 10 agencé dans le même segment de route (1), **caractérisé en ce que** l'algorithme, en utilisant au moins un signal numérique de capteur d'accélération (103), calcule une déformation du revêtement de la route (2) à la position du capteur d'accélération (29) sous la forme d'une double intégration du signal du capteur d'accélération (103) au cours du temps, cette déformation étant un déplacement réversible du revêtement de la route (2) et du sous-sol de la route (3) d'une position d'équilibre sous l'action d'une force; **en ce que** l'algorithme fournit la déformation en tant qu'information de déformation (109); que l'algorithme fournit l'information de déformation (109) en tant que fonction mathématique, laquelle fonction mathématique comprend des paramètres de déformation (110) et le temps en tant que variables.

12. Procédé selon la revendication 11, **caractérisé en ce que** l'algorithme introduit les paramètres de déformation (110) dans une autre fonction mathématique; que ladite autre fonction mathématique comprend le signal numérique de capteur de force (101) en tant que variable; que l'algorithme, en utilisant la fonction mathématique supplémentaire, donne un signal numérique corrigé de capteur de force (108); que la fonction mathématique supplémentaire minimise l'effet de la déformation du revêtement de la route (2) et du sous-sol de la route (3) sur le signal corrigé du capteur de force (108).

13. Procédé selon l'une quelconque des revendications 11 à 12, **caractérisé en ce que** l'algorithme stocke l'information de déformation (109) avec le signal numérique de capteur de force (101) associé et le signal numérique de capteur de température (105) associé à un moment prédéterminé par un utilisateur avec un horodatage (106) sur l'élément de mémoire non volatile (32) ou sur l'élément d'évaluation externe (36).

14. Procédé selon la revendication 13, **caractérisé en ce que** l'algorithme charge l'information de déformation stockée (109) à partir de l'élément de mémoire non volatile (32) ou de l'élément d'évaluation externe (36) et fournit le déroulement chronologique de l'information de déformation (109); que l'algorithme calcule par moyen d'extrapolation un intervalle de temps dans lequel l'information de déformation (109) atteindra une certaine valeur prédéfinie; et **en ce que** l'algorithme donne l'intervalle de temps jusqu'à ce que cette valeur préréglée soit atteinte comme l'intervalle de temps jusqu'au prochain entretien du segment de route (1).

15. Procédé selon l'une quelconque des revendications 11 à 14, **caractérisé en ce que** l'algorithme compare au moins un signal numérique de capteur d'accélération (103) à au moins une signature caractéristique d'une présence d'un véhicule (10) au dessus du capteur d'accélération (29); **en ce qu'**une signature caractéristique est au moins une amplitude prédéfinie, connue du signal numérique de capteur d'accélération (103) stockée dans l'élément de mémoire non volatile (32); **en ce que** si une signature caractéristique est détectée, l'algorithme génère une information de présence positive (107); une information de présence positive (107) indiquant la présence d'un véhicule (10) sur le segment de route (1); et **en ce que** l'algorithme effectue la mise en marche, l'arrêt ou la réduction de l'alimentation électrique (34) d'un élément électronique sur la base des informations de présence positives ou négatives (107).
